# EUROPÄISCHE PATENTSCHRIFT

(11) **EP 2 408 897 B1**
(45) Veröffentlichungstag und Bekanntmachung des Hinweises auf die Patenterteilung: **07.11.2012**
(21) Anmeldenummer: 10714844.7
(22) Anmeldetag: 02.03.2010
(51) Int. Cl.: C12C 13/00

(54) **BRAUEREIANLAGE ZUR HERSTELLUNG UND ABFÜLLUNG VON BIER**
BREWERY FACILITY FOR PRODUCING AND BOTTLING BEER
COMPLEXE DE BRASSERIE POUR LA PRODUCTION ET LE SOUTIRAGE DE BIÈRE

(30) Priorität: 19.03.2009 DE 102009013579
(43) Veröffentlichungstag der Anmeldung: 25.01.2012
(73) Patentinhaber: GEA BREWERY SYSTEMS GMBH, 97318 Kitzingen (DE); Radeberger Gruppe KG, 60598 Frankfurt am Main (DE)
(72) Erfinder: MICHEL, Rudolf, 96049 Bamberg (DE); SCHELLER, Ludwig, 56729 Ettringen (DE); WIEGAND, Gerd, 64807 Dieburg (DE)
(74) Vertreter: von den Steinen, Axel
(86) Internationale Anmeldenummer: PCT/DE2010/000227
(87) Internationale Veröffentlichungsnummer: WO 2010/105590

(56) Entgegenhaltungen:
- EP-A1- 1 705 242
- DE-A1-102007 054 429
- MOELLER M ET AL: "Use of brewery wastes as energy sources for breweries. (translated) TIOL- Die Energieversorgung einer Brauerei mit Brauereireststoffen." WEIHENSTEPHANER 1992 LEHRSTUHL FUER ENERGIE- UND UMWELTECH. DER LEBENSMITTELIND., TECH. UNIV. MUENCHEN-WEIHENSTEPHAN, 8050 FREISING, GERMANY, Bd. 60, Nr. 4, 1992, Seite 205, XP009138265
- PENSEL S: "Complete heat supply to a brewhouse from the waste heat from a gas engine. (translated) TIOL- Die vollstaendige Waermeversorgung des Sudhauses durch Abwaerme einer Gasmotoranlage." BRAUWELT 1991 LEHRSTUHL FUER ENERGIE- UND UMWELTTERCH., TECH. UNIV. MUENCHEN, WEIHENSTEPHAN, FEDERAL REPUBLIC OF GERMANY, Bd. 131, Nr. 38, 1991, Seite 1630, XP009138254
- HELLER W ET AL: "Solar energy in the brewery. (translated) TIOL- Solarenergie in der Brauerei." BRAUWELT 1978, Bd. 118, Nr. 27, 1978, Seite 972, XP009138256
- FOHR M: "Renewable energy in breweries and malthouses. Ecological fantasy or economic alternative? (translated)" BRAUWELT 2000, Bd. 140, Nr. 1/2, 2000, Seite 9, XP009138259
- PENSEL S: "Provision of heat and cooling in the brewery. (translated) TIOL- Zur Waerme- und Kaelteversorgung in der Brauerei." BRAUWELT 1976 INST. FUER MASCHINENTECH., ENERGIEWIRTSCHAFT & BETRIEBSWIRTSCHAFT, TECH. UNIV. MUENCHEN, 8050 FREISING-WEIHENSTEPHAN, FEDERAL REPUBLIC OF GERMANY, Bd. 116, Nr. 34, 1976, Seite 1075, XP009138252
- PENSEL S: "Supplying energy and water to the various departments of a brewery. (translated) TIOL- Die Versorgung der verschiedenen Abteilungen des Brauereibetriebes mit Energie und Wasser." MITTEILUNGEN DER VERSUCHSSTATION FUER DAS GAERUNGSGEWERBE IN WIEN 1978, Bd. 32, Nr. 11/12, 1978, Seite 119, XP009138266
- UNTERSTEIN K: "Determination of the capacity of some production and energy supply sectors of a brewery. (translated)" BRAUWELT 2000, Bd. 140, Nr. 32, 2000, XP009138260

## Beschreibung

Die Erfindung betrifft eine Brauereianlage zur Herstellung und Abfüllung von Bier nach dem Oberbegriff des Anspruchs 1.

Brauereianlagen bestehen üblicherweise aus mehreren Anlageteilen, um in den verschiedenen Anlageteilen stufenweise aus den Rohstoffen zunächst die Bierwürze herzustellen, anschließend die Bierwürze zu Bier zu vergären und zuletzt das trinkfertige Bier in Flaschen abzufüllen. In allen Anlageteilen wird dabei Prozessenergie benötigt, um die verschiedenen Teilprozesse ablaufen zu lassen. Für die nachfolgend darzustellende Erfindung sind dabei von den verschiedenen Anlageteilen einer Brauereianlage lediglich die Sudhausanlage zur Herstellung der Bierwürze und die Abfüllanlage zur Abfüllung des Biers in Flaschen von näherem Interesse. Die Brauereianlage insgesamt kann aber selbstverständlich noch weitere Anlagebestandteile umfassen.

Die Erfindung betrifft die möglichst effektive Energieversorgung einer Brauereianlage und dabei insbesondere die besonders effektive Versorgung der Brauereianlage mit Prozesswärme. Besonders viel Prozesswärme wird nämlich in der Sudhausanlage beim Einmaischen, insbesondere beim Maischekochen und bei der Würzebereitung, insbesondere bei der Würzekochung, benötigt. Ebenfalls ein relativ hoher Anteil an Prozesswärme wird in der Brauereianlage beim Abfüllen des Biers in die Flaschen und bei allen dabei betroffenen Teilprozessen, insbesondere bei der Flaschenreinigung und bei der Pasteurisation, verbraucht.

Bei bekannten Brauereianlagen ist zur Versorgung der Sudhausanlage und der Abfüllanlage mit Prozesswärme ein zentrales Energieversorgungsnetz vorgesehen, in dem ein Wärmeüberträger, beispielsweise Dampf- und/oder Hochtemperaturwasser, zirkuliert und dadurch die verschiedenen Anlageteile mit der jeweils notwendigen Prozesswärme versorgt. Zur Einspeisung der notwendigen Prozesswärme in das zentrale Energieversorgungsnetz ist dabei üblicherweise ein Wärmekraftwerk vorgesehen, in welchem fossile Brennstoffe verbrannt und auf diesem Weg der Wärmeüberträger auf das notwendige Temperaturniveau erwärmt wird.

Eine solche Brauereianlage mit einem zentralen Energieversorgungsnetz zur Versorgung aller Anlageteile mit Prozesswärme hat den Nachteil, dass die unterschiedlichen Temperaturniveaus, auf denen die Prozesswärme in den unterschiedlichen Anlageteilen notwendig ist, nicht berücksichtigt werden. Dies bedeutet mit anderen Worten, dass die gesamte Prozesswärme in das zentrale Energieversorgungsnetz mit einer Energiedichte eingespeist werden muss, die sich aus dem Teilprozess mit der höchsten Maximaltemperatur ergibt. Wird beispielsweise für einen Teilprozess in der Brauereianlage eine Temperatur des Wärmeüberträgers von 165°C benötigt, muss die gesamte in der Brauereianlage benötigte Prozesswärme mit einer dieser maximalen Temperatur entsprechenden Energiedichte eingespeist werden. Die Nutzung vieler Energieerzeugungsmethoden für den Betrieb einer Brauereianlage wurde dadurch ausgeschlossen, da bei vielen Energieerzeugungsmethoden, insbesondere alternativen Energieerzeugungsmethoden, eine so hohe Energiedichte mit entsprechend hohem Maximaltemperaturniveau nicht erreicht werden kann.

Ausgehend von diesem Stand der Technik ist es deshalb Aufgabe der vorliegenden Erfindung, eine neue Brauereianlage zur Herstellung und Abfüllung von Bier vorzuschlagen, in der der Ersatz von fossilen Brennstoffen zur Erzeugung von Prozesswärme durch alternative Energieerzeugungsmethoden ermöglicht wird. Diese Aufgabe wird durch eine Brauereianlage nach der Lehre des Anspruchs 1 gelöst.

Vorteilhafte Ausführungsformen der Erfindung sind Gegenstand der Unteransprüche.

Der Erfindung liegt die Analyse des Temperaturniveaus zum Betrieb der verschiedenen Teilprozesse in der Sudhausanlage und in der Abfüllanlage zugrunde. Dabei hat sich die Erkenntnis ergeben, dass das maximale Temperaturniveau in den Teilprozessen der Sudhausanlage sehr viel höher liegt als das maximale Temperaturniveau der Teilprozesse in der Abfüllanlage. Der Anteil der Prozesswärme zum Betrieb der Abfüllanlage kann deshalb mit einer weit geringeren Energiedichte und damit mit anderen Energieerzeugungsmethoden eingespeist werden als die Prozesswärme zum Betrieb der Teilprozesse in der Sudhausanlage. Erfindungsgemäß ist es deshalb in der Brauereinanlage vorgesehen, dass zur Versorgung der Sudhausanlage mit Prozessenergie in Form von Prozesswärme ein erstes Energieversorgungsnetz vorgesehen ist, wohingegen zur Versorgung der Abfüllanlage mit Prozessenergie in der Form von Prozesswärme ein zweites Energieversorgungsnetz vorgesehen ist. In den beiden Energieversorgungsnetzen zirkuliert dabei jeweils ein Wärmeüberträger, beispielsweise Heißwasser oder Dampf. Diese Wärmeüberträger werden dabei für die beiden Energieversorgungsnetze jeweils getrennt voneinander in unterschiedlichen Energieerzeugungsanlagen, die den beiden Energieversorgungsnetzen jeweils zugeordnet sind, erhitzt und dann durch Zirkulation der Wärmeüberträger auf die verschiedenen Energieverbraucher in der Sudhausanlage bzw. auf die verschiedenen Energieverbraucher in der Abfüllanlage verteilt. Da das erste Energieversorgungsnetz vom zweiten Energieversorgungsnetz getrennt ist, kann die für die Abfüllanlage notwendige Prozesswärme mit einer geringeren Energiedichte in das zweite Energieversorgungsnetz eingespeist werden. Erfindungsgemäß ist es deshalb vorgesehen, dass die maximale Temperatur des Wärmeüberträgers im ersten Energieversorgungsnetz über der maximalen Temperatur des Wärmeüberträgers im zweiten Energieversorgungsnetz liegt. Durch diese Aufspaltung des Temperaturniveaus in der Sudhausanlage einerseits und in der Abfüllanlage andererseits gelingt es dann, dass die gesamte zum Betrieb der Abfüllanlage notwendige Prozesswärme mit einer entsprechend niedrigeren Energiedichte, d.h. mit einer entsprechend niedrigeren Temperatur, erzeugt und in das zweite Energieversorgungsnetz eingespeist werden kann. Nur der für den Betrieb der Sudhausanlage verbleibende Restbedarf an Prozesswärme muss mit der entsprechend hohen Energiedichte erzeugt werden, so dass ein entsprechend kleinerer Anteil des Gesamtbedarfs der Brauereianlage an Prozesswärme mit der entsprechend hohen Energiedichte erzeugt und über das erste Energieversorgungsnetz verteilt werden muss.

Welche Maximaltemperaturen der Wärmeüberträger im ersten Energieversorgungsnetz bzw. im zweiten Energieversorgungsnetz aufweist, ist grundsätzlich beliebig und muss auf die jeweiligen Bedürfnisse in den verschiedenen Teilprozessen der Sudhausanlage bzw. der Abfüllanlage abgestimmt werden. Gemäß einer bevorzugten Ausführungsform weist der Wärmeüberträger im ersten Energieversorgungsnetz eine Maximaltemperatur über 100°C auf. Die sich daraus ergebende relativ hohe Energiedichte reicht ohne weiteres aus, um die üblichen Teilprozesse der Sudhausanlage, insbesondere den Maischprozess und den Würzekochprozess, durchzuführen.

Die maximale Temperatur des Wärmeüberträgers im zweiten Energieversorgungsnetz sollte bevorzugt im Temperaturbereich zwischen 75°C und 99°C, insbesondere im Temperaturbereich zwischen 85°C und 95°C, liegen. Bei diesem Temperaturniveau des Wärmeüberträgers im zweiten Energieversorgungsnetz können alle wesentlichen Teilprozesse in der Abfüllanlage, insbesondere der Flaschenreinigungsprozess zur Reinigung von Gebrauchtflaschen und/oder der Rinserprozess zur Spülung von unbenutzten Neuflaschen und/oder der Pasteurisierungsprozess zur Pasteurisierung des in die Flaschen abgefüllten Biers, ohne weiteres betrieben werden. Durch das Temperaturniveau im zweiten Energieversorgungsnetz unterhalb von 100°C wird außerdem erreicht, dass eine Vielzahl von Energieerzeugungsmethoden, insbesondere alternative Energieerzeugungsmethoden, herangezogen werden können, um die notwendige Prozesswärme zur Verfügung zu stellen.

Die Energieerzeugungsanlage zur Einspeisung der Prozesswärme in das erste, der Sudhausanlage zugeordnete Energieversorgungsnetz kann selbstverständlich in der Art eines konventionellen, mit fossilen Brennstoffen befeuerten Wärmekraftwerks ausgebildet sein. Um die CO₂-Bilanz beim Betrieb der Brauereianlage im Hinblick auf die Verringerung von Treibhausgasen zu verbessern, ist es jedoch besonders vorteilhaft, wenn in der Energieerzeugungsanlage des ersten Energieversorgungsnetzes Biomasse durch Vergasen und/oder Verbrennen thermisch verwertet werden kann. Dazu werden Biomasseverwertungsanlagen, beispielsweise Heizkraftwerke zur Verbrennung von Hackschnitzeln, eingesetzt, die die notwendige Prozesswärme zur Einspeisung in das erste Energieversorgungsnetz durch Vergasen und/oder Verbrennen von Biomasse erzeugen. Das dabei freigesetzte CO₂ entspricht dabei gerade der Menge an Treibhausgas, die zuvor in der Biomasse gebunden gewesen ist. Da nicht der gesamte Energiebedarf der Brauereianlage durch thermische Verwertung von Biomasse zur Verfügung gestellt werden muss, sondern lediglich der Anteil zur Versorgung der Sudhausanlage, können Biomasseverwertungsanlagen vertretbarer Größe und Auslegung zum Einsatz kommen.

Besonders vorteilhaft ist es, wenn die Biomasseverwertungsanlage derart ausgestaltet ist, dass in ihr der bei der Bierproduktion in der Sudhausanlage beim Abläutern bzw. Abfiltern der Bierwürze anfallende Biertreber thermisch verwertet werden kann. Im Ergebnis wird dadurch erreicht, dass der Energieerzeugungsanlage zur Prozesswärmeversorgung der Sudhausanlage kein Brennstoff von außen zugeführt werden muss, sondern der Brennstoff, nämlich der Biertreber, aus dem Herstellungsprozess selbst abgeleitet wird. Der besondere Vorteil in Verbindung mit dem erfindungsgemäßen Prinzip der Trennung des Temperaturniveaus mit zwei getrennten Energieversorgungsnetzen liegt dabei darin, dass die für die thermische Verwertung zur Verfügung stehende Menge an Biertreber zwar nicht dazu ausreicht, den gesamten Prozesswärmebedarf der Brauereianlage zu decken, aber für die Deckung des Prozesswärmebedarfs in der Sudhausanlage selber ausreichend ist. Das heißt, der thermische Verwertungsprozess zur Verwertung des Biertrebers ist dazu geeignet, eine Menge an Prozesswärme zur Verfügung zu stellen, die im Hinblick auf ihre Energiedichte und im Hinblick auf den Energiebedarf geeignet ist, alle Teilprozesse in der Sudhausanlage mit Prozesswärme zu versorgen.

Das erfindungsgemäße Prinzip der Aufspaltung des Energieniveaus zwischen der Sudhausanlage und der Abfüllanlage ermöglicht den Einsatz von Energieerzeugungsanlagen, in denen die Prozesswärme mit einer relativ geringen Energiedichte erzeugt wird. Insbesondere können somit durch das erfindungsgemäße Prinzip der Aufspaltung des Energieniveaus alternative Energieerzeugungsanlagen für den Betrieb der Brauereianlage eingesetzt werden, die bisher aufgrund der relativ geringen Energiedichte der darin erzeugten Prozesswärme nicht zum Einsatz kommen konnten. Insbesondere können Solarthermieanlagen, in denen Heißwasser durch Nutzung von Sonnenergie erwärmt wird, zum Einsatz kommen. Auch die Möglichkeit zum Einsatz von Geothermieanlagen, in denen das Heißwasser durch Nutzung von Erdwärme erwärmt wird, ist denkbar. Des Weiteren besteht auch die Möglichkeit der Nutzung von Abwärme aus anderen Prozessen der Brauereinanlage. Dazu wird die Abwärme mit Abwärmerückgewinnungsanlagen wieder gewonnen und mit der in der Abwärme enthaltenen Energie Heißwasser erwärmt.

Welche Art von Abwärme in der Abwärmerückgewinnungsanlage zurückgewonnen wird, ist grundsätzlich beliebig. Besonders vorteilhaft ist es, wenn in der Brauereianlage ein Blockheizkraftwerk vorgesehen ist, das Strom erzeugt. Die bei der Stromerzeugung anfallende Abwärme des Blockheizkraftwerks kann dann wiederum zur Erwärmung von Heißwasser genutzt werden, das als Wärmeüberträger im zweiten Energieversorgungsnetz zirkuliert. Weitere Möglichkeiten zur Nutzung von Abwärme sind gegeben, wenn die Brauereianlage eine Brennstoffzelle aufweist. Auch die Brennstoffzelle erlaubt die Herstellung von elektrischer Energie, wobei die dabei anfallende Abwärme durch Einsatz der Abwärmerückgewinnungsanlage als Prozesswärme in das zweite Energieversorgungsnetz eingespeist wird. Auch die Abwärme aus Kühlkreisläufen der Brauereianlage oder die Abwärme aus Kompressoren der Brauereianlage, wie sie beispielsweise in Kühlanlagen zur Kühlung notwendig sind, kann genutzt werden um Heißwasser zu erwärmen und auf diese Weise Prozesswärme in das zweite Energieversorgungsnetz einzuspeisen.

Soweit in der Brauereianlage ein Blockheizkraftwerk zur kombinierten Strom- und Wärmeerzeugung vorgesehen ist, sollte dieses Blockheizkraftwerk im Hinblick auf die Treibhausgasbilanz der Brauerei bevorzugt mit Biogas betrieben werden. Dies bedeutet mit anderen Worten, dass im Blockheizkraftwerk Biogas verbrannt wird, um auf diese Weise elektrische Energie und Prozesswärme zu erzeugen.

Welche Art von Biogas beim Betrieb des Blockheizkraftwerks eingesetzt wird, ist wiederum grundsätzlich beliebig. Um die Zuführung von externem Biogas zu vermeiden, kann in der Brauereinanlage eine Fermentationsanlage vorgesehen werden, in der Abwässer der Brauereianlage fermentiert und teilweise zu Biogas umgesetzt werden.

Besonders geeignet zur Fermentation in der Fermentationsanlage ist das Abwasser der Brauerei generell, insbesondere das Abwasser, das durch Abpressen von feuchten Biertrebern in der Abpressanlage hergestellt wird. Soweit der Biertreber in der Brauereianlage thermisch verwertet werden soll, um Prozesswärme für das erste Energieversorgungsnetz zur Verfügung zu stellen, ist eine solche Abpressanlage ohnehin notwendig, da ansonsten die thermische Verwertung des Biertrebers nicht oder nur sehr eingeschränkt möglich ist.

Um die anfallende Prozesswärme möglichst vollständig ausnutzen zu können, ist es besonders vorteilhaft, wenn überschüssige Prozesswärme aus dem zweiten, der Abfüllanlage zugeordneten Energieversorgungsnetz zur Kälteproduktion genutzt wird. Dazu können Absorptionskältemaschinen eingesetzt werden, in denen die Prozesswärme in Kühlleistung umgesetzt wird.

Verschiedene Aspekte der Erfindung sind in den Zeichnungen schematisch dargestellt und werden nachfolgend beispielhaft erläutert.

Es zeigen:
- Fig. 1: die unterschiedlichen Temperaturniveaus der verschiedenen Teilprozesse in der Sudhausanlage einer Brauerei einerseits und einer Abfüllanlage einer Brauerei andererseits;
- Fig. 2: eine schematisiert dargestellte Brauereianlage mit der Prozesswärmeversorgung der Sudhausanlage einerseits und der Abfüllanlage andererseits.

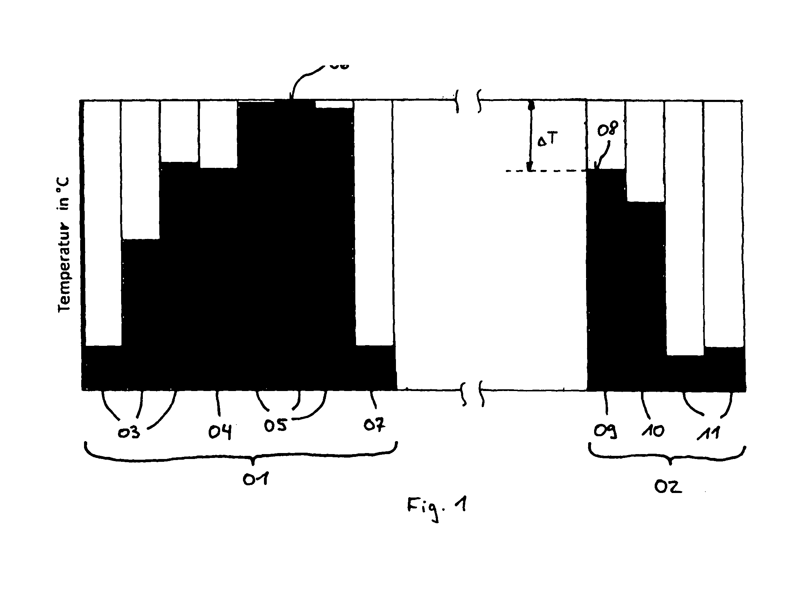

Fig. 1 zeigt die Temperaturniveaus der Teilprozesse in einer Sudhausanlage 01 einerseits und einer Abfüllanlage 02 andererseits. In der Sudhausanlage 01 wird die Würze dabei nacheinander während des Maischprozesses 03, dem Läuterprozess 04 und dem Würzekochprozess 05 bis auf ein maximales Temperaturniveau 06 erhitzt und anschließend im Würzekühlprozess 07 heruntergekühlt. In der Abfüllanlage 02 wird das maximale Temperaturniveau 08 vom Flaschenreinigungsprozess 09 bestimmt, wohingegen die Temperaturen beim Pasteurisationsprozess 10 und beim Abfüllprozess 11 signifikant niedriger liegen. Die Differenz zwischen der maximalen Temperatur 06 in der Sudhausanlage 01 und der maximalen Temperatur 08 in der Abfüllanlage 02 ist die Grundlage der erfindungsgemäßen Brauereianlage mit den getrennten Energieversorgungsnetzen zur Versorgung der Sudhausanlage 01 mit Prozesswärme und zur Versorgung der Abfüllanlage 02 mit Prozesswärme.

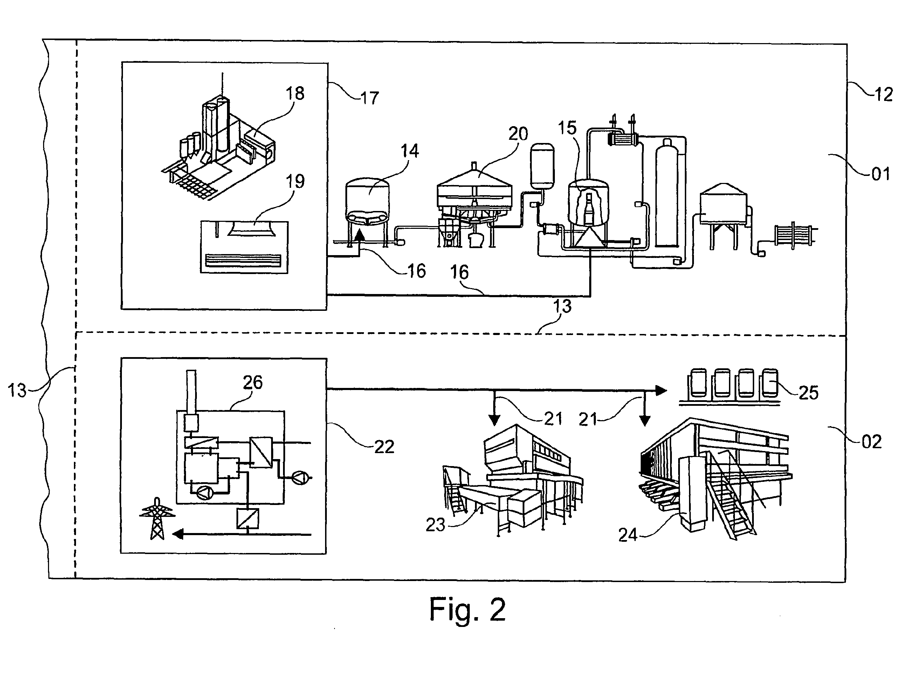

Fig. 2 zeigt einen schematisierten Teilausschnitt einer Brauereianlage 12 mit der schematisiert dargestellten Sudhausanlage 01 und der schematisiert dargestellten Abfüllanlage 02. Im Hinblick auf die Versorgung mit Prozesswärme sind die Sudhausanlage 01 und die Abfüllanlage 02 durch eine Grenze 13 voneinander getrennt. Zur Versorgung des Maischgefäßes 14 und des Würzekochgefäßes 15 mit der notwendigen Prozesswärme dient ein erstes Energieversorgungsnetz 16, in das die Prozesswärme aus einer ersten Energieerzeugungsanlage 17 eingespeist wird. Im dargestellten Beispiel dient als erste Energieerzeugungsanlage zur Einspeisung der Prozessenergie in das erste Energieversorgungsnetz 16 ein Heizkraftwerk 18, in dessen schematisiert dargestelltem Brennkessel 19 der beim Abläutern im Läutergefäß 20 anfallende Biertreber verbrannt werden kann. Auf diese Weise kann Heißdampf bzw. Heißwasser mit einer Temperatur höher als 100°C erzeugt und über das Energieversorgungsnetz 16 auf die verschiedenen Teilprozesse in der Sudhausanlage 01 verteilt werden.

Zur Versorgung der Teilprozesse in der Abfüllanlage 02 mit Prozesswärme dient ein zweites Energieversorgungsnetz 21, in das die Prozesswärme aus einer zweiten Energieerzeugungsanlage 22 eingespeist wird. Die in der zweiten Energieerzeugungsanlage 22 erzeugte Prozesswärme wird über das zweite Energieversorgungsnetz 21 an die Flaschenreinigungsanlage 23, an die Flaschenpasteurisierungsanlage 24 und an die CIP-Reinigungsanlage 25 übertragen.

Im dargestellten Ausführungsbeispiel dient als zweite Energieerzeugungsanlage 22 ein Blockheizkraftwerk 26, mit dem elektrische Energie erzeugt und ins Stromnetz eingespeist werden kann. Zum Betrieb des Blockheizkraftwerks 26 wird Biogas verbrannt, das durch Fermentation von Abwässern erzeugt wird, wobei als Abwasser unter anderem das Presswasser benutzt wird, das beim Abpressen des Biertrebers aus dem Läutergefäß 20 anfällt. Die bei der notwendigen Kühlung des Blockheizkraftwerks 26 anfallende Abwärme wird als Prozesswärme über das zweite Energieversorgungsnetz 21 in die verschiedenen Anlageteile der Abfüllanlage 02 eingespeist.

## Patentansprüche

1. Brauereianlage (12) zur Herstellung und Abfüllung von Bier, mit einer Sudhausanlage (01), in der aus Rohstoffen unter Einsatz von Prozessenergie Bierwürze hergestellt wird, und mit einer Abfüllanlage (02), in der das aus der Bierwürze hergestellte Bier unter Einsatz von Prozessenergie in Verpackungsbehälter, insbesondere Flaschen, abgefüllt wird,
**dadurch gekennzeichnet,**
**dass** zur Versorgung der Sudhausanlage (01) mit Prozessenergie ein erstes Energieversorgungsnetz (16) vorgesehen ist, in das Prozesswärme mit einem ersten Temperaturniveau aus zumindest einer ersten Energieerzeugungsanlage (17) eingespeist und durch einen Wärmeüberträger auf verschiedene Energieverbraucher (14, 15) in der Sudhausanlage (01) verteilt wird, und dass zur Versorgung der Abfüllanlage (02) mit Prozessenergie ein zweites Energieversorgungsnetz (21) vorgesehen ist, in das Prozesswärme mit einem zweiten Temperaturniveau aus zumindest einer zweiten Energieerzeugungsanlage (22) eingespeist und durch einen Wärmeüberträger auf verschiedene Energieverbraucher (23, 24, 25) in der Abfüllanlage (02) verteilt wird, wobei die maximale Temperatur des Wärmeüberträgers im ersten Energieversorgungsnetz über der maximalen Temperatur des Wärmeüberträgers im zweiten Energieversorgungsnetz liegt.

2. Brauereianlage nach Anspruch 1,
**dadurch gekennzeichnet,**
**dass** die maximale Temperatur des Wärmeüberträgers im ersten Energieversorgungsnetz (16) über 100°C liegt.

3. Brauereianlage nach Anspruch 1 oder 2,
**dadurch gekennzeichnet,**
**dass** der Maischprozess und/oder der Würzekochprozess aus dem ersten, der Sudhausanlage zugeordneten Energieversorgungsnetz (16) mit Prozesswärme versorgt werden.

4. Brauereianlage nach einem der Ansprüche 1 bis 3,
**dadurch gekennzeichnet,**
**dass** die maximale Temperatur des Wärmeüberträgers im zweiten Energieversorgungsnetz (21) im Temperaturbereich zwischen 75°C und 99°C, insbesondere im Temperaturbereich zwischen 85°C und 95°C, liegt.

5. Brauereianlage nach einem der Ansprüche 1 bis 4,
**dadurch gekennzeichnet,**
**dass** der Flaschenreinigungsprozess zur Reinigung von gebrauchten Flaschen und/oder der Rinserprozess zur Spülung von unbenutzten Neuflaschen und/oder Pasteurisierungsprozess zur Pasteurisierung des Biers aus dem zweiten, der Abfüllanlage zugeordneten Energieversorgungsnetz (21) mit Prozesswärme versorgt werden.

6. Brauereianlage nach einem der Ansprüche 1 bis 5,
**dadurch gekennzeichnet,**
**dass** eine Energieerzeugungsanlage (17) zur Einspeisung von Prozessenergie ins erste, der Sudhausanlage (01) zugeordnete Energieversorgungsnetz (16) in der Art einer Biomasseverwertungsanlage (18) ausgebildet ist, in der Biomasse durch Vergasen und/oder Verbrennen thermisch verwertet werden kann.

7. Brauereianlage nach Anspruch 6,
**dadurch gekennzeichnet,**
**dass** in der Biomasseverwertungsanlage (18) der bei der Würzeproduktion in der Sudhausanlage (01) beim Abläutern oder Abfiltern der Bierwürze anfallende Biertreber durch Vergasen und/oder Verbrennen thermisch verwertet werden kann.

8. Brauereianlage nach einem der Ansprüche 1 bis 7,
**dadurch gekennzeichnet,**
**dass** eine Energieerzeugungsanlage (22) zur Einspeisung von Prozessenergie ins zweite, der Abfüllanlage (02) zugeordnete Energieversorgungsnetz (21) in der Art einer Solarthermieanlage, in der Heißwasser durch Nutzung von Sonnenenergie erwärmt werden kann, und/oder in der Art einer Geothermieanlage, in der Heißwasser durch Nutzung von Erdwärme erwärmt werden kann, und/oder in der Art einer Abwärmerückgewinnungsanlage, in der Heißwasser durch Nutzung von Abwärme aus einem anderen Anlageteil (26) erwärmt werden kann, ausgebildet ist.

9. Brauereianlage nach Anspruch 8,
**dadurch gekennzeichnet,**
**dass** in der Abwärmerückgewinnungsanlage die Abwärme aus einem Blockheizkraftwerk (26) der Brauereianlage (12) oder die Abwärme aus einer Brennstoffzelle der Brauereianlage (12) oder die Abwärme aus einem Kühlkreislauf der Brauereianlage (12) oder die Abwärme aus einem Kompressor der Brauereianlage (12) zur Erwärmung von Heißwasser genutzt wird.

10. Brauereianlage nach Anspruch 9,
**dadurch gekennzeichnet,**
**dass** im Blockheizkraftwerk (26) der Brauereianlage (12) Biogas zur Erzeugung von Strom und Prozesswärme thermisch verwertet wird.

11. Brauereianlage nach Anspruch 10,
**dadurch gekennzeichnet,**
**dass** im Blockheizkraftwerk (26) der Brauereianlage (12) Biogas thermisch verwertet wird, das in einer Fermentationsanlage durch Fermentation von Abwasser der Brauereianlage (12) hergestellt wird.

12. Brauereianlage nach Anspruch 11,
**dadurch gekennzeichnet,**
**dass** das Abwasser zur Herstellung des Biogases in der Fermentationsanlage durch Abpressen von feuchtem Biertreber aus der Sudhausanlage (01) in einer Abpressanlage hergestellt wird.

13. Brauereianlage nach einem der Ansprüche 1 bis 12,
**dadurch gekennzeichnet,**
**dass** überschüssige Prozesswärme aus dem zweiten, der Abfüllanlage (02) zugeordneten Energieversorgungsnetz (21) zur Kälteproduktion in einer Absorptionskältemaschine genutzt werden kann.

## Claims

1. Brewery plant (12) for producing and bottling beer, comprising a brewhouse facility (01) in which wort is produced from raw materials while employing process energy, and further comprising a bottling facility (02) in which the beer produced from the wort is filled into packaging containers, in particular bottles, while employing process energy,
**characterized in that**
in order to supply the brewhouse facility (01) with process energy, a first energy supply network (16) is provided, into which process heat having a first temperature level is fed from at least one first energy generation facility (17) and is distributed by a heat transfer means to different energy consumers (14, 15) in the brewhouse facility (01), and in order to supply the bottling facility (02) with process heat a second energy supply network (21) is provided, into which process heat having a second temperature level is fed from at least one second energy generation facility (22) and is distributed by a heat transfer means to different energy consumers (23, 24, 25) in the bottling facility (02), wherein the maximum temperature of the heat transfer means in the first energy supply network is above the maximum temperature of the heat transfer means in the second energy supply network.

2. Brewery plant according to Claim 1,
**characterized in that**
the maximum temperature of the heat transfer means in the first energy supply network (16) is above 100°C.

3. Brewery plant according to Claim 1 or 2,
**characterized in that**
the mashing process and/or the wort boiling process are supplied with process heat from the first energy supply network (16), which is assigned to the brewhouse facility.

4. Brewery plant according to any of Claims 1 to 3,
**characterized in that**
the maximum temperature of the heat transfer means in the second energy supply network (21) is in the temperature range between 75°C and 99°C, in particular in the temperature range between 85°C and 95°C.

5. Brewery plant according to any of Claims 1 to 4,
**characterized in that**
the bottle cleaning process for cleaning used bottles and/or the rinsing process for rinsing unused new bottles and/or the pasteurizing process for pasteurizing the beer are supplied with process heat from the second energy supply network (21), which is assigned to the bottling facility.

6. Brewery plant according to any of Claims 1 to 5,
**characterized in that**
an energy generation facility (17) for feeding process heat into the first energy supply network (16), which is assigned to the brewhouse facility (01), is designed in the type of a biomass utilization facility (18), in which the biomass can be thermally utilized by means of gasification and/or combustion.

7. Brewery plant according to Claim 6,
**characterized in that**
the spent grains resulting from the wort production in the brewhouse facility (01) during the lautering or filtering of the wort can be thermally utilized in the biomass utilization facility (18) by means of gasification and/or combustion.

8. Brewery plant according to any of Claims 1 to 7,
**characterized in that**
an energy generation facility (22) for feeding process heat into the second energy supply network (21), which is assigned to the bottling facility (02), is designed in the type of a solar thermal plant, in which hot water can be heated using solar energy, and/or in the type of a geothermal plant, in which hot water can be heated using geothermal heat, and/or in the type of a waste heat recovery plant, in which hot water can be heated using waste heat from another plant section (26).

9. Brewery plant according to Claim 8,
**characterized in that**
in the waste heat recovery plant the waste heat from a cogeneration unit (26) of the brewery plant (12) or the waste heat from a fuel cell of the brewery plant (12) or the waste heat from a cooling circuit of the brewery plant (12) or the waste heat from a compressor of the brewery plant (12) is utilized for heating hot water.

10. Brewery plant according to Claim 9,
**characterized in that**
in the cogeneration unit (26) of the brewery plant (12) biogas is thermally utilized for generating electricity and process heat.

11. Brewery plant according to Claim 10,
**characterized in that**
in the cogeneration unit (26) of the brewery plant (12) biogas, which is produced in a fermentation facility by fermenting waste water of the brewery plant (12), is thermally utilized.

12. Brewery plant according to Claim 11,
**characterized in that**
the waste water for producing the biogas in the fermentation facility is produced by squeezing the wet spent grains from the brewhouse facility (01) in a squeezing unit.

13. Brewery plant according to any of Claims 1 to 12,
**characterized in that**
excess process heat from the second energy supply network (21), which is assigned to the bottling plant (02), can be utilized for generating cooling energy in an absorption refrigeration unit.

## Revendications

1. Installation de brasserie (12) pour la production et l'embouteillage de bière, comprenant une unité de brassage (01), dans laquelle du moût est produit à partir de matières premières en utilisant de l'énergie de processus, et en outre comprenant une installation d'embouteillage (02), dans laquelle la bière produite à partir du moût est versée dans des récipients d'emballage, en particulier des bouteilles, en utilisant de l'énergie de processus,
**caractérisée en ce qu'**
afin d'alimenter l'unité de brassage (01) en énergie de processus un premier réseau d'alimentation en énergie (16) est prévu, qui est alimenté en chaleur de processus ayant un premier niveau de température à partir d'au moins une première installation de génération d'énergie (17), la chaleur de processus étant distribuée par l'intermédiaire d'un moyen de transfert de chaleur à différents consommateurs d'énergie (14, 15) dans l'unité de brassage (01), et afin d'alimenter l'installation d'embouteillage (02) en chaleur de processus un second réseau d'alimentation en énergie (21) est prévu, qui est alimenté en chaleur de processus ayant un second niveau de température à partir d'au moins une seconde installation de génération d'énergie (22), la chaleur de processus étant distribuée par l'intermédiaire d'un moyen de transfert de chaleur à différents consommateurs d'énergie (23, 24, 25) dans l'installation d'embouteillage (02), la température maximale du moyen de transfert de chaleur dans le premier réseau d'alimentation en énergie étant supérieure à la température maximale du moyen de transfert de chaleur dans le second réseau d'alimentation en énergie.

2. Installation de brasserie selon la revendication 1,
**caractérisée en ce que**
la température maximale du moyen de transfert de chaleur dans le premier réseau d'alimentation en énergie (16) est supérieure à 100°C.

3. Installation de brasserie selon la revendication 1 ou 2,
**caractérisée en ce que**
le processus de trempage et/ou le processus de cuisson du moût sont alimentés en chaleur de processus à partir du premier réseau d'alimentation en énergie (16) qui est associé à l'unité de brassage.

4. Installation de brasserie selon l'une quelconque des revendications 1 à 3,
**caractérisée en ce que**
la température maximale du moyen de transfert de chaleur dans le second réseau d'alimentation en énergie (21) se trouve dans la plage de température allant de 75°C à 99°C, en particulier dans la plage de température allant de 85°C à 95°C.

5. Installation de brasserie selon l'une quelconque des revendications 1 à 4,
**caractérisée en ce que**
le processus de nettoyage de bouteilles pour le nettoyage de bouteilles utilisées et/ou le processus de rinçage pour le rinçage de bouteilles nouvelles inutilisées et/ou le processus de pasteurisation pour la pasteurisation de la bière sont alimentés en énergie de processus provenant du second réseau d'alimentation en énergie (21) qui est associé à l'installation d'embouteillage.

6. Installation de brasserie selon l'une quelconque des revendications 1 à 5,
**caractérisée en ce qu'**
une installation de génération d'énergie (17) pour alimenter en chaleur de processus le premier réseau d'alimentation en énergie (16), qui est associé à l'unité de brassage (01), est conçue du type d'une installation d'utilisation de biomasse (18), dans laquelle la biomasse peut être utilisée thermiquement à l'aide de gazéification et /ou de combustion.

7. Installation de brasserie selon la revendication 6,
**caractérisée en ce que**
les drêches résultant de la production du moût dans l'unité de brassage (01) lors de la clarification ou la filtration du moût peuvent être utilisées thermiquement dans l'installation d'utilisation de biomasse (18) à l'aide de gazéification et/ou de combustion.

8. Installation de brasserie selon l'une quelconque des revendications 1 à 7,
**caractérisée en ce qu'**
une installation de génération d'énergie (22) pour alimenter en chaleur de processus le second réseau d'alimentation en énergie (21), qui est associé à l'installation d'embouteillage (02), est conçue du type d'une installation solaire thermique, dans laquelle de l'eau chaude peut être chauffée en utilisant de l'énergie solaire et/ou du type d'une installation géothermique, dans laquelle de l'eau chaude peut être chauffée en utilisant de la chaleur géothermique et/ou du type d'une installation de récupération de chaleur perdue, dans laquelle de l'eau chaude peut être chauffée en utilisant de la chaleur perdue provenant d'une autre zone de l'installation (26).

9. Installation de brasserie selon la revendication 8,
**caractérisée en ce que**
dans l'installation de récupération de chaleur perdue, la chaleur perdue provenant d'une unité de cogénération (26) de l'installation de brasserie (12) ou la chaleur perdue provenant d'une pile à combustible de l'installation de brasserie (12) ou la chaleur perdue provenant d'un circuit de refroidissement de l'installation de brasserie (12) ou la chaleur perdue provenant d'un compresseur de l'installation de brasserie (12) est utilisée pour le chauffage d'eau chaude.

10. Installation de brasserie selon la revendication 9,
**caractérisée en ce que**
du biogaz est utilisé thermiquement dans l'unité de cogénération (26) de l'installation de brasserie (12) pour la génération d'électricité et de chaleur de processus.

11. Installation de brasserie selon la revendication 10,
**caractérisée en ce que**
du biogaz, qui est produit dans une installation de fermentation par la fermentation des eaux usées de l'installation de brasserie (12), est thermiquement utilisé dans l'unité de cogénération (26) de l'installation de brasserie (12).

12. Installation de brasserie selon la revendication 11,
**caractérisée en ce que**
les eaux usées pour la production du biogaz dans l'installation de fermentation sont générées par le pressage des drêches mouillées provenant de l'unité de brassage (01) dans une unité de pressage.

13. Installation de brasserie selon l'une quelconque des revendications 1 à 12,
**caractérisée en ce que**
la chaleur de processus en excès provenant du second réseau d'alimentation en énergie (21), qui est associé à l'installation d'embouteillage (02), peut être utilisée pour la génération d'énergie de refroidissement dans une unité de refroidissement d'absorption.
